# EUROPÄISCHE PATENTANMELDUNG

(11) **EP 0 610 573 A2**
(43) Veröffentlichungstag der Anmeldung: **17.08.1994**
(21) Anmeldenummer: 93119936.8
(22) Anmeldetag: 10.12.1993
(51) Int. Cl.: B02C 21/00, B02C 17/07

(54) **Mahlverfahren und zugehörige Mahlanlage**

(30) Priorität: 11.02.1993 DE 4303987
(71) Anmelder: Klöckner-Humboldt-Deutz Aktiengesellschaft, D-51149 Köln (DE)
(72) Erfinder: Ramesohl, Hubert, D-51427 Bergisch Gladbach (DE); Schneider, Richard, Dipl.-Ing., D-42929 Wermelskirchen (DE); Hagedorn, Alexander, Dipl.-Ing., D-50259 Pulheim (DE)

(57) **Zusammenfassung**

Um bei der Mahlung von z. B. Zementklinker auf Zementfeinheit, insbesondere bei einer Mahlanlage mit Mühle, der eine Gutbettzerkleinerungs-Walzenpresse vorgeschaltet ist, den Gesamtenergiebedarf (kWh/t) noch weiter zu senken, wird erfindungsgemäß vorgeschlagen, die konventionelle Drehrohrmühle bzw. Kugelmühle durch eine solche Mühle (13) zu ersetzen, bei der um die Drehachse herum mehrere sektional angeordnete Mahlkammern angeordnet sind, die parallel zur Drehachse der Mühle (13) liegen und die vom Mahlgut parallel durchwandert werden.

## Beschreibung

Die Erfindung betrifft ein Mahlverfahren sowie eine Mahlanlage mit einer Vorzerkleinerungseinrichtung, deren Austragsgut in einer nachgeschalteten Mühle auf Fertiggutfeinheit gemahlen wird.

Man hat in der letzten Zeit erhebliche Anstrengungen unternommen, die sehr geringe Energieausnutzung in den Zerkleinerungsmaschinen, insbesondere in den Drehrohrmühlen bzw. Kugelmühlen zu steigern, bei denen die Prallenergie der Mahlkörperkugeln ganz überwiegend statt in Zerkleinerungsarbeit in Wärme umgesetzt wird. So ist eine zweistufige Einrichtung zur Zerkleinerung bzw. Mahlung spröden Mahlgutes wie z. B. nicht vorzerkleinerter Zementklinker bekannt (EP-B-0 084 383), bei der das Mahlgut zunächst in einer ersten Stufe im Spalt einer Walzenpresse unter relativ hohem Druck gepreßt wird, was teils zur Partikelzerstörung, teils zur Erzeugung von Anrissen im Partikelinneren führt und sich sichtbar in der Bildung von Agglomeraten äußert, die dann in einer zweiten Stufe in einer Rohrmühle bzw. Kugelmühle mit vergleichsweise geringem Energieaufwand zerstört und auf Fertiggutfeinheit gemahlen werden können. Die mit einer hohen Preßkraft betriebene Walzenpresse erzeugt bei der Materialpressung Agglomerate (Schülpen), deren Mahlbarkeit verglichen mit ungepreßtem Material erheblich verbessert ist, so daß die bekannte zweistufige Zerkleinerung insgesamt zu einer deutlichen Verminderung des spezifischen Energiebedarfs (z. B. kWh/t) führt. In der Walzenpresse werden die einzelnen Materialpartikel in einem Gutbett, d. h. in einer zwischen zwei Flächen zusammengedrückten Materialschüttung gegenseitig zerquetscht, so daß man bei der ersten Stufe von der sogenannten Gutbettzerkleinerung spricht, die im Spalt der Hochdruck-Walzenpresse realisiert wird. In der der Walzenpresse nachgeschalteten Drehrohrmühle wird dann das Pressenaustragsgut desagglomeriert und auf Fertiggutfeinheit gemahlen. Die Feinheit des Fertigguts, z. B. Zement, wird von der zweiten Stufe der Zerkleinerung bzw. Mahlung, d. h. von der Rohrmühle bestimmt, welche die gewünschte Endfeinheit des Fertiggutes und damit Produktqualität erreichen muß.

Der Erfindung liegt die Aufgabe zugrunde, das Mahlverfahren sowie die zugehörige Mahlanlage der eingangs genannten Art, die sich ohnehin schon durch einen niedrigen Gesamtenergiebedarf auszeichnet, so zu verbessern, daß der spezifische Energiebedarf noch weiter reduziert ist.

Diese Aufgabe wird gemäß der Erfindung verfahrensmäßig mit den Maßnahmen des Anspruchs 1 und vorrichtungsmäßig mit den Maßnahmen des Anspruchs 2 gelöst. Vorteilhafte Ausgestaltungen der Erfindung sind in den Unteransprüchen angegeben.

Beim erfindungsgemäßen Mahlverfahren und bei der erfindungsgemäßen Mahlanlage wird auf den Einsatz einer mit Mahlkörpern gefüllten Mühle nicht ganz verzichtet, weil diese bis heute notwendig ist, um die Qualität eines Kugelmühlen-Zements zu erreichen, besonders wenn das Mühlenaufgabegut aus gepreßten Schülpen besteht, die aus plattigen scharfkantigen Partikeln zusammengesetzt sind. Erfindungsgemäß wird aber keine konventionelle Kugelmühle eingesetzt, sondern eine Drehmühle, die im Querschnitt mehrere sektional angeordnete Mahlkammern aufweist, deren Achsen parallel zur Drehachse der Mühle angeordnet sind. Das Mahlgut durchwandert in Parallelschaltung die sektional um die Drehachse herum angeordneten Mahlkammern, wo es mit Hilfe der Mahlkörper, z.B. Kugeln, auf Fertiggutfeinheit gebracht wird, z.B. von einer Feinheit von 2000 cm²/g auf über 3000 cm²/g (Blaine). Dabei wird in den einzelnen sektional angeordneten Mahlkammern von den einzelnen Mahlkörpern weniger Schlagarbeit ausgeübt, wie das bei einer normalen Kugelmühle der Fall ist, sondern mehr Reibarbeit, was zum Abreiben und Rundmachen der plattigen scharfkantigen Materialpartikel, wie sie insbesondere aus dem Schülpenmaterial einer vorgeschalteten Gutbettzerkleinerungs-Hochdruckwalzenpresse kommen, günstig ist. Die Energieausnutzung, d. h. die Leistung von Zerkleinerungsarbeit in den sektional angeordneten Mahlkammern ist schon deswegen erhöht, weil in jeder der Mahlkammern zu jedem Zeitpunkt Zerkleinerungsarbeit geleistet wird. Hinzu kommt, daß dadurch, daß das Haufwerk (Mahlkörper plus Mahlgut) auf die mehreren sektional angeordneten Mahlkammern um die Mühlendrehachse herum einigermaßen gleichmäßig verteilt ist, bei dieser Drehmühle die jeweiligen Unbalance-Momente in jeder Drehstellung der Mühle minimiert sind, was infolge Verringerung der Antriebsenergie ebenfalls zur Reduzierung des spezifischen Energiebedarfs (kWh/t) der Mahlanlage erheblich beiträgt. Weil in den sektional angeordneten Mahlkammern das Mahlgut im Vergleich zu einer üblichen Kugelmühle auf eine größere Oberfläche verteilt wird, ist auch eine bessere Produktkühlung möglich, so daß der Einsatz eines eigenen nachgeschalteten Produktkühlers, der sonst z. B. vor dem Abfüllen von heißem Zement in Säcke erforderlich wäre, unter Umständen entfallen kann.

Die Erfindung und deren weitere Merkmale und Vorteile werden anhand der in den Figuren schematisch dargestellten Ausführungsbeispiele näher erläutert.

Es zeigt
- Fig. 1:: eine erfindungsgemäße Mahlanlage mit einer als Durchlaufmühle ausgebildeten Drehmühle, die im Querschnitt mehrere sektional angeordnete Mahlkammern aufweist;
- Fig. 2:: eine der Fig. 1 ähnliche Mahlanlage, deren Drehmühle als Becherwerksumlaufmühle mit Sichter ausgebildet ist;
- Fig. 3:: in vergrößerter Darstellung schematisch einen Querschnitt durch die Sektional-Drehmühle längs der Linie III-III der Fig. 1 (oder auch der Fig. 2), und
- Fig. 4:: ein weiteres Fließbild einer sogenannten Teilfertig-Mahlung mit Einsatz einer Sektional-Drehmühle in der zweiten Mahlstufe.

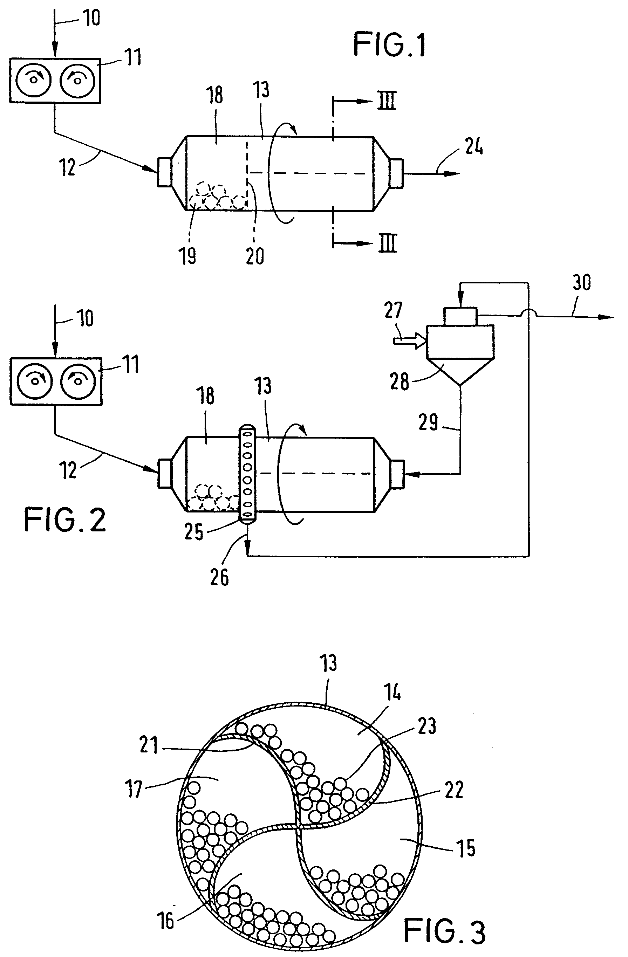

Bei der Mahlanlage nach Fig. 1 wird das zu zerkleinernde Frischgut (10), z. B. nicht vorzerkleinerter Zementklinker mit einer Korngröße bis beispielsweise 100 mm, in den Aufgabeschacht einer Hochdruck-Walzenpresse (11) eingeführt. Die Korngröße eines wesentlichen Teils des frischen Aufgabeguts (10) ist größer als die Weite des engsten Walzenspaltes von z. B. 20 mm zwischen den beiden Preßwalzen, die einen Durchmesser von z. B. 900 mm aufweisen können. Die auf das Gut drückende Preßkraft der Walzen der Walzenpresse (11) beträgt mehr als 2 t/cm Walzenlänge, beispielsweise 6 bis 9 t/cm. Das Aufgabegut wird im Spalt zwischen den Walzen durch eine kombinierte Einzelkornzerkleinerung und Gutbettzerkleinerung zerkleinert. Zur Durchführung des letztgenannten Zerkleinerungsprinzips wird das Aufgabegut in so großer Menge dem Aufgabeschacht der Walzenpresse (11) zugeführt, daß das zu zerkleinernde und zwischen die Walzen durch Reibung eingezogene Gut die Walzen auseinanderdrückt und die Teilchen des Aufgabeguts sich im Walzenspalt im Kollektiv bzw. in einem Gutbett gegenseitig zerquetschen. Der Zementklinker tritt aus dem Walzenspalt zerkleinert und teilweise agglomeriert, d. h. zu Schülpen (12) verpreßt aus, deren Anteil an bereits bis zur gewünschten Zementfeinheit reduzierten Partikeln bereits relativ hoch sein kann, z. B. 25 % kleiner 90 µm.

Der Hochdruck-Walzenpresse (11) ist eine Drehmühle (13) nachgeschaltet, die ausweislich des Querschnittbildes der Fig. 3 im Ausführungsbeispiel vier um die Drehachse herum symmetrisch und sektional angeordnete Mahlkammern (14 bis 17) aufweist, deren Achsen parallel zur Drehachse der Mühle angeordnet sind. Die Mühle (13) weist an der Seite des Einlaufs des Gutmaterials, das in Form der Schülpen (12) vom Austrag der Walzenpresse (11) kommt, eine im Querschnitt zylindrische Desagglomerier-Trommel (18) auf, in der die Schülpen (12) ggf. mit Hilfe von Mahlkörpern (19) aufgelöst werden. Die Desagglomerier-Trommel (18) steht über eine perforierte Trennwand (20) hindurch mit den mehreren sektional angeordneten und mit ihren Achsen parallel zur Drehachse der Mühle liegenden Mahlkammern (14 bis 17) in Verbindung, d.h. das desagglomerierte Gutmaterial durchwandert die Mahlkammern (14 bis 17), die durch Trennwände (21, 22 etc.) voneinander getrennt und jeweils mit Mahlkörpern (23) wie z.B. Metallkugeln gefüllt sind, in den Ausführungsbeispielen der Fig. 1 und 2 von links nach rechts. Das in der Mühle (13) auf Fertiggutfeinheit gemahlene Gut verläßt die Mühle bei (24). Von den in den einzelnen Mahlkammern (14 bis 17) vorhandenen Haufwerken sind in Fig. 3 nur die Mahlkörper (23) zu sehen, nicht das Mahlgut selbst.

Bei der Mahlanlage der Fig. 2 ist die Drehmühle (13) eine Becherwerksumlaufmühle, die genauso wie die Mühle (13) der Fig. 1 eine zylindrische Desagglomerier-Trommel (18) sowie daran anschließend die vier parallel zur Drehachse der Mühle liegenden sektional angeordneten Mahlkammern (14 bis 17) aufweist. Dabei sind der Gutauslauf der Desagglomerier-Trommel (18), in welcher die von der Walzenpresse (11) kommenden Materialschülpen (12) desagglomeriert werden, und der Gutauslauf der sektional angeordneten Mahlkammern (14 bis 17) von einem gemeinsamen drehfest angeordneten Gutausfallgehäuse (25) umfaßt, dessen Gutaustrag (26) ggf. über ein Becherwerk zu einem mit Sichtluft (27) betriebenen Sichter (28) führt, dessen Grobgutaustrag (29) in das der Desagglomerier-Trommel (18) abgewandte Ende der sektional angeordneten Mahlkammern (14 bis 17) der Mühle (13) eingeführt ist. Aus dem vom Sichter (28) abgezogenen, mit dem Feingut beladenen Sichtluftstrom (30) wird dann in einem nicht dargestellten Abscheider das feine Fertiggut abgetrennt.

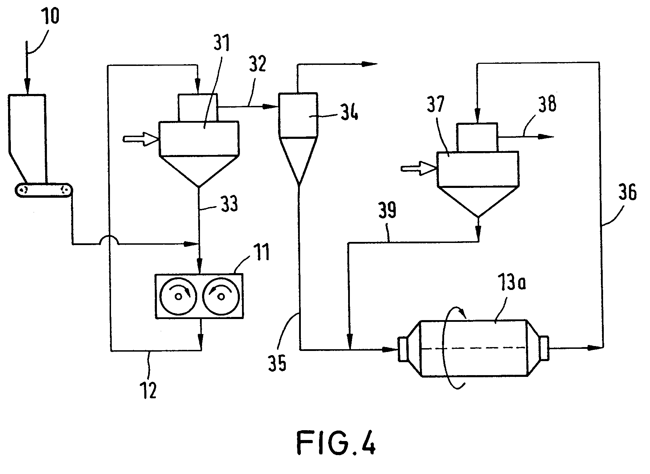

Bei der Mahlanlage der Fig. 4 wird ein noch höherer Anteil der zur Mahlung des Frischgutes (10) erforderlichen Mahlenergie in die Hochdruck-Walzenpresse (11) verlagert, deren gepreßte Schülpen (12) desagglomeriert und in einem Sichter (31) in Feingut (32) und Grobgut (33) getrennt werden, wobei das Grobgut (33) in den Aufgabeschacht der Guthettzerkleinerungs-Walzenpresse (11) rezirkuliert wird. Die feine Kornfraktion (32) wird nach Durchlaufen eines Entstaubungszyklons (34) über Leitung (35) in die sektional angeordneten Mahlkammern (14 bis 17) [siehe Fig. 3] der Mühle (13a) eingeführt und dort gemahlen. Der Mühlenaustrag (36) der Kreislaufmahlanlage wird im Sichter (37) in Fertiggut (38) und Sichtergrieße (39) getrennt, welch letztere zur Mühle (13a) rezirkuliert werden. Es besteht auch die Möglichkeit, die beiden Sichter (31 und 37) zu einem einzigen Sichter zusammenzufassen, der dann zweckmäßiger Weise als Dreiproduktsichter ausgebildet ist, nämlich zum Abzug einer Feinkornfraktion, einer Mittelkornfraktion und einer Grobkornfraktion, und wobei dann der Mühlenaustrag (36) auf diesen einzigen Sichter aufgegeben wird.

Die Erfindung ist auch anwendbar bei einer Mahlanlage, bei welcher der Mühle (13 bzw. 13a) mit den mehreren sektional angeordneten Mahlkammern (14 bis 17) nicht eine Walzenpresse (11), sondern eine Zerkleinerungsmaschine wie z. B. normale Kugelmühle, Vertikalmühle bzw. Walsenschüsselmühle, Vertikalprallbrecher, Kreiselbrecher, normaler Prallbrecher, Hammermühle, Backenbrecher etc. vorgeschaltet ist. Zur Herstellung von Normzement werden die erforderlichen Zuschlagstoffe wie insbesondere Gips zweckmäßigerweise in den Einlauf der Mühle (13 bzw. 13a) mit den sektional angeordneten Mahlkammern gegeben. Wird eine eisenfreie Vermählung verlangt, z. B. bei der Herstellung von Weißzement, besteht die Möglichkeit, die sektionalen Mahlkammern (14 bis 17) mit Keramik auszukleiden und statt Stahlkugeln Keramikkugeln als Mahlkörper zu verwenden. Weil Keramikkulgeln ein geringeres spezifisches Gewicht haben als Stahlkugeln, haben solchermaßen ausgestattete Mühlen einen noch höheren spezifischen Energiebedarf, so daß die erfindungsgemäß erzielbare Energieersparnis hierbei besonders bedeutend ist. Ist das Mahlgut von Haus aus schon sehr fein, z. B. Zirkonsand, kann die der Mühle (13, 13a) vorgeschaltete Vorzerkleinerungseinrichtung weggelassen werden. Die Erfindung ist auch besonders gut anwendbar bei der Modernisierung von vorhandenen alten Mahlanlagen durch Umbau oder Ersatz vorhandener alter konventioneller Rohrmühlen, die wie eingangs geschildert durch ihre besonders geringe Energieausnutzung charakterisiert sind.

## Patentansprüche

1. Verfahren zur Zerkleinerung von Mahlgut, dadurch gekennzeichnet, daß das Mahlgut (10) nach seiner Vorzerkleinerung in einer solchen Mühle (13, 13a) auf Fertiggutfeinheit gemahlen wird, bei der um eine Drehachse herum mehrere sektional und parallel zur Drehachse liegende Mahlkammern (14 bis 17) angeordnet sind, die vom Mahlgut in Parallelströmen durchwandert werden.

2. Mahlanlage mit einer Vorzerkleinerungseinrichtung, deren Austragsgut in einer nachgeschalteten Mühle auf Fertiggutfeinheit gemahlen wird, dadurch gekennzeichnet, daß die Mühle (13, 13a) im Querschnitt mehrere sektional angeordnete Mahlkammern (14 bis 17) aufweist, deren Achsen parallel zur Drehachse der Mühle angeordnet sind.

3. Mahlanlage nach Anspruch 2, dadurch gekennzeichnet, daß die der Mühle (13, 13a) vorgeschaltete Vorzerkleinerungseinrichtung aus einer Hochdruck-Walzenpresse (11) mit Gutbettzerkleinerung des Aufgabegutes besteht.

4. Mahlanlage nach Anspruch 2, dadurch gekennzeichnet, daß der Mühle (13, 13a) eine normale Kugelmühle, Vertikalmühle bzw. Walzenschüsselmühle, Vertikalprallbrecher, Kreiselbrecher, normaler Prallbrecher, Hammermühle, Backenbrecher etc. vorgeschaltet ist.

5. Mahlanlage nach Anspruch 3, dadurch gekennzeichnet, daß die Mühle (13) an der Seite des Einlaufs des Gutmaterials, das (in Form von Schülpen) vom Austrag der Walzenpresse (11) kommt, eine im Querschnitt zylindrische Desagglomerier-Trommel (18) aufweist, die über eine perforierte Trennwand (20) hindurch mit den mehreren sektional angeordneten und mit ihren Achsen parallel zur Drehachse der Mühle liegenden Mahlkammern (14 bis 17) in Verbindung steht.

6. Mahlanlage nach Anspruch 5, dadurch gekennzeichnet, daß der Gutauslauf der Desagglomerier-Trommel (18) und der Gutauslauf der sektional angeordneten Mahlkammern (14 bis 17) der Mühle (13) von einem gemeinsamen drehfest angeordneten Gutausfallgehäuse (25) umfaßt sind, dessen Gutaustrag (26) zu einem Sichter (28) führt, dessen Grobgutaustrag (29) in das der Desagglomerier-Trommel (18) abgewandte Ende der sektional angeordneten Mahlkammern eingeführt ist.

7. Mahlanlage nach einem der Ansprüche 2 bis 6, dadurch gekennzeichnet, daß die parallel zur Drehachse sektional angeordneten Mahlkammern (14 bis 17) durch den Drehrohrquerschnitt in Sektionen einteilende Trennwände (21, 22) voneinander getrennt sind, die in das Innere der Mahlkammern (14 bis 17) hineingewölbt sind.

8. Mahlanlage nach Anspruch 7, dadurch gekennzeichnet, daß die Trennwände (21, 22) im Querschnitt der Mühle (13, 13a) die Gestalt zweier sich kreuzender S bzw. spiegelbildlich angeordneter S aufweisen (S-Mühle).
